(19) Europäisches Patentamt / European Patent Office / Office européen des brevets

(11) **EP 4 348 014 B1**

(12) **EUROPÄISCHE PATENTSCHRIFT**

(45) Veröffentlichungstag und Bekanntmachung des Hinweises auf die Patenterteilung:
**15.04.2026 Patentblatt 2026/16**

(21) Anmeldenummer: **22731611.4**

(22) Anmeldetag: **01.06.2022**

(51) Internationale Patentklassifikation (IPC):
*F01N 3/28* (2006.01)   *F01N 3/037* (2006.01)
*F01N 3/035* (2006.01)   *B01D 53/24* (2006.01)
*B01F 25/4314* (2022.01)   *F23J 15/02* (2006.01)
*F23M 5/02* (2006.01)

(52) Gemeinsame Patentklassifikation (CPC):
**F01N 3/037; B01F 25/43141; F01N 3/035;**
**F01N 3/2803; F23J 15/02; F23M 5/02;** B01D 53/24;
B01F 2025/9321; F01N 2240/20; F01N 2250/02;
F01N 2590/10; F23J 2215/40

(86) Internationale Anmeldenummer:
**PCT/EP2022/064980**

(87) Internationale Veröffentlichungsnummer:
**WO 2022/253929 (08.12.2022 Gazette 2022/49)**

(54) **ABGASNACHBEHANDLUNGSEINRICHTUNG**

EXHAUST GAS AFTERTREATMENT DEVICE

DISPOSITIF DE POST-TRAITEMENT DES GAZ D'ÉCHAPPEMENT

(84) Benannte Vertragsstaaten:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priorität: **02.06.2021 DE 102021205653**

(43) Veröffentlichungstag der Anmeldung:
**10.04.2024 Patentblatt 2024/15**

(73) Patentinhaber: **Fraunhofer-Gesellschaft zur**
**Förderung**
**der angewandten Forschung e.V.**
**80686 München (DE)**

(72) Erfinder: **ALEYSA, Mohammadshayesh**
**70569 Stuttgart (DE)**

(74) Vertreter: **Friese Goeden Patentanwälte**
**PartGmbB**
**Widenmayerstraße 49**
**80538 München (DE)**

(56) Entgegenhaltungen:
WO-A2-2004/048850   CH-A- 83 265
DE-C- 382 436       DE-C- 76 842
US-A- 5 633 066     US-B2- 7 279 022

**Beschreibung**

Die Erfindung betrifft eine Abgasnachbehandlungseinrichtung für eine Feuerstätte, aufweisend zumindest einen Strömungspfad, welcher von einem ersten Ende der Abgasnachbehandlungseinrichtung zu einem zweiten Ende der Abgasnachbehandlungseinrichtung in Form einer Schraubenlinie verläuft. Derartige Abgasnachbehandlungssysteme sind z.B. aus der US 5,633,066 A1 bekannt.

Aus der nachveröffentlichten deutschen Patentanmeldung DE 10 2019 218 807 A1 ist eine Abgasnachbehandlungseinrichtung bekannt, welche aus einer Mehrzahl scheibenförmiger Elemente zusammengesetzt ist. Die scheibenförmigen Elemente weisen jeweils eine Öffnung auf. Sofern ein scheibenförmiges Element gegenüber dem benachbarten scheibenförmigen Element um einen vorgebbaren Winkel verdreht angeordnet wird, ergibt sich ein gewendelter Strömungspfad. Während der Durchströmung können Schadstoffe im Abgas nachoxidiert und/oder Feinstäube abgeschieden werden.

Es hat sich jedoch gezeigt, dass diese bekannte Abgasnachbehandlungseinrichtung nicht in allen Ausführungsformen eine effiziente Schadstoffreduktion sicherstellen kann. Darüber hinaus kann der Aufbau aus einzelnen scheibenförmigen Elementen aufwendig sein. Ausgehend vom Stand der Technik liegt der Erfindung somit die Aufgabe zugrunde, eine Abgasnachbehandlungseinrichtung mit verbesserter Reinigungswirkung bereitzustellen. Weiterhin liegt der Erfindung in einigen Ausführungsformen die Aufgabe zugrunde, den Aufbau einer Abgasnachbehandlungseinrichtung zu vereinfachen.

Die Aufgabe wird erfindungsgemäß durch eine Abgasnachbehandlungseinrichtung gemäß Anspruch 1 gelöst. Vorteilhafte Weiterbildungen der Erfindung finden sich in den Unteransprüchen.

Erfindungsgemäß wird eine Abgasnachbehandlungseinrichtung vorgeschlagen, welche zumindest einen Strömungspfad aufweist. Der Strömungspfad reicht von einem ersten Ende der Abgasnachbehandlungseinrichtung zu einem zweiten Ende der Abgasnachbehandlungseinrichtung. Das Abgas kann somit am ersten Ende in die Abgasnachbehandlungseinrichtung eintreten, dem Strömungspfad folgen und am zweiten Ende aus der Abgasnachbehandlungseinrichtung austreten. Innerhalb der Abgasnachbehandlungseinrichtung können gasförmige Schadstoffe und/oder Feinstäube unschädlich gemacht werden. Beispielsweise können Stickoxide reduziert werden. Kohlenmonoxid und/oder Kohlenwasserstoffe und/oder Feinstaub kann oxidiert werden.

Erfindungsgemäß wird vorgeschlagen, dass der Strömungspfad innerhalb der Abgasnachbehandlungseinrichtung zumindest abschnittsweise in Form einer Schraubenlinie verläuft. Für die Zwecke der vorliegenden Erfindung bezeichnet eine Schraubenlinie eine Kurve, die sich mit einer vorgebbaren Steigung um den Mantel eines Zylinders windet. Die Steigung kann konstant oder entlang der Längserstreckung variabel sein. Diejenige Strecke, um welche sich die Schraubenlinie bei einer vollen Umdrehung nach oben in Richtung der Zylinderachse windet, wird in der nachfolgenden Beschreibung als Ganghöhe $h$ bezeichnet. Der Quotient aus Ganghöhe $h$ und Umfang wird nachfolgend als Steigung $k$ bezeichnet, d. h. $k = \frac{h}{2\pi r}$ . Erfindungsgemäß wird vorgeschlagen, dass die Schraubenlinie des Strömungspfades eine Steigung $k$ besitzt, welche größer als 0,35 ist. In anderen Ausführungsformen der Erfindung ist die Steigung $k$ größer als etwa 0,6. In wiederum anderen Ausführungsformen der Erfindung ist die Steigung $k$ größer als etwa 0,8. In wiederum anderen Ausführungsformen der Erfindung ist die Steigung $k$ größer als etwa 1,0. Schließlich kann die Steigung $k$ in einigen Ausführungsformen größer als etwa 1,2 sein. Dieses Merkmal hat die Wirkung, dass eine gute Durchmischung des nachzubehandelnden Abgases mit einem Oxidations- und/oder Reduktionsmittel erfolgen kann, die Verweilzeit verlängert werden kann und Feinstäube durch einen Zykloneffekt abgeschieden werden können. Hierdurch kann die erfindungsgemäße Abgasnachbehandlungseinrichtung eine effiziente Abgasreinigung sicherstellen.

Die erfindungsgemäße Abgasnachbehandlungseinrichtung wird in Feuerstätten eingesetzt, wie beispielsweise Heizkessel oder Einzelraumfeuerungsanlagen, wie beispielsweise Kachel- oder Kaminöfen. In anderen Ausführungsformen der Erfindung kann die Abgasnachbehandlungseinrichtung auch für Industrieöfen, thermische Abfallverwertung, Krematorien oder andere, heiße Abgase erzeugende Einrichtungen verwendet werden.

In einigen Ausführungsformen der Erfindung kann die Schraubenlinie des Strömungspfades eine Steigung $k$ aufweisen, welche kleiner als etwa 1,0 ist. In einigen Ausführungsformen der Erfindung kann die Schraubenlinie eine Steigung $k$ aufweisen, welche kleiner als etwa 1,2 ist. In anderen Ausführungsformen der Erfindung kann die Schraubenlinie eine Steigung $k$ aufweisen, welche kleiner als etwa 1,6 ist. In wiederum anderen Ausführungsformen der Erfindung kann die Steigung $k$ der Schraubenlinie kleiner als etwa 2,0 sein. Erfindungsgemäss ist die Steigung $k$ der Schraubenlinie kleiner als 2,5.

Die Steigung $k$ kann somit aus folgenden Bereichen gewählt sein: $0,35 \leq k \leq 1,0$ oder $0,35 \leq k \leq 1,2$ oder $0,35 \leq k \leq 1,6$ oder $0,35 \leq k \leq 2,0$ oder $0,35 \leq k \leq 2,5$ oder $0,6 \leq k \leq 1,0$ oder $0,6 \leq k \leq 1,2$ oder $0,6 \leq k \leq 1,6$ oder $0,6 \leq k \leq 2,0$ oder $0,6 \leq k \leq 2,5$ oder $0,8 \leq k \leq 1,0$ oder $0,8 \leq k \leq 1,2$ oder $0,8 \leq k \leq 1,6$ oder $0,8 \leq k \leq 2,0$ oder $0,8 \leq k \leq 2,5$ oder $1,0 \leq k \leq 1,2$ oder $1,0 \leq k \leq 1,6$ oder $1,0 \leq k \leq 2,0$ oder $1,0 \leq k \leq 2,5$ oder $1,2 \leq k \leq 1,6$ oder $1,2 \leq k \leq 2,0$ oder $1,2 \leq k \leq 2,5$. Hierbei kann die Steigung an die Länge der Abgasnachbehandlungseinrichtung angepasst werden.

In einigen Ausführungsformen der Erfindung kann der Strömungspfad einen Durchmesser von 20 cm bis 150 cm aufweisen. In anderen Ausführungsformen der Erfindung kann der Strömungspfad einen Durchmesser von etwa 25 cm bis etwa 80 cm aufweisen. In wiederum anderen Ausführungsformen der Erfindung kann der Strömungspfad einen Durchmesser von etwa 80 cm bis etwa 120 cm aufweisen. In wiederum anderen Ausführungsformen der Erfindung kann der Strömungspfad einen Durchmesser von etwa 20 cm bis etwa 50 cm aufweisen. Hierbei kann der Durchmesser und damit der Querschnitt des Strömungspfades an die anfallende Abgasmenge angepasst werden, wobei die jeweils niedrigeren Werte beispielsweise für Einzelraumfeuerungsanlagen Verwendung finden und die größeren Werte für größere Heizkessel, beispielsweise zur Versorgung eines Mehrparteienhauses oder einer Industrieanlage. Die Anpassung des Durchmessers an die anfallende Abgasmenge stellt dabei sicher, dass die Strömungsgeschwindigkeit in einem vorgebbaren Bereich bleibt, welcher den Druckverlust des Abgases in der Abgasnachbehandlungseinrichtung in einem tolerablen Bereich hält und andererseits eine hinreichend turbulente Strömung ermöglicht, welche eine gute Durchmischung des Abgases mit einem Oxidations- und/oder Reduktionsmittel ermöglicht.

In einigen Ausführungsformen der Erfindung kann die Innenseite des Strömungspfades eine Mehrzahl von Stufen aufweisen. In einigen Ausführungsformen der Erfindung können die Stufen jeweils eine Höhe von 8 mm bis 30 mm aufweisen. In anderen Ausführungsformen der Erfindung können die Stufen jeweils eine Höhe von etwa 15 mm bis etwa 25 mm aufweisen. Die Stufen können scharfkantig ausgeführt sein, sodass an den Vorderkanten der Stufen ein Strömungsabriss erfolgt und das in der Abgasnachbehandlungseinrichtung strömende Abgas turbulent durch den Strömungspfad strömt. Die hierdurch zusätzlich eingebrachte Turbulenz ermöglicht eine effiziente Durchmischung des Abgases mit einem Oxidations- oder Reduktionsmittel, sodass die Effizienz der Abgasnachbehandlung erhöht sein kann.

In einigen Ausführungsformen der Erfindung kann die Länge des Strömungspfades das 0,5-fache bis 5-fache der Ganghöhe h betragen. In anderen Ausführungsformen der Erfindung kann die Länge Strömungspfades etwa das 0,9-fache bis etwa das 3-fache der Ganghöhe $h$ betragen. In wiederum anderen Ausführungsformen der Erfindung kann die Länge des Strömungspfades etwa das 1-fache bis etwa das 2,5-fache der Ganghöhe $h$ betragen. Schließlich kann in einigen Ausführungsformen der Erfindung die Länge des Strömungspfades etwa das 0,9-fache bis etwa das 2-fache der Ganghöhe $h$ betragen. Eine solchermaßen ausgestaltete Abgasnachbehandlungseinrichtung nimmt wenig Bauraum ein und stellt trotzdem sicher, dass Schadstoffe aus dem Abgas mit hoher Effizienz entfernt werden.

In einigen Ausführungsformen der Erfindung können Querschnitt, Länge und Steigung $k$ des Strömungspfades so gewählt sein, dass der Druckverlust eines den Strömungspfad durchströmenden Abgases kleiner als etwa 100 Pa ist. Eine solche Abgasnachbehandlungseinrichtung kann beispielsweise die Abgase eines Heizkessels oder eines Industrieofens effizient reinigen, welcher mit einem Gebläse ausgestattet ist, welches Verbrennungsluft und Abgas durch den Kessel fördert.

In einigen Ausführungsformen der Erfindung können Querschnitt, Länge und Steigung $k$ des Strömungspfades so gewählt sein, dass der Druckverlust eines den Strömungspfad durchströmenden Abgases kleiner als etwa 50 Pa ist. Durch den geringeren Abgasgegendruck kann die Leistung und/oder der Wirkungsgrad eines mit der Abgasnachbehandlungseinrichtung ausgestatteten Heizkessels erhöht sein.

Erfindungsgemäss sind Querschnitt, Länge und Steigung k des Strömungspfades so gewählt, dass der Druckverlust eines den Strömungspfad durchströmenden Abgases kleiner als 10 Pa oder kleiner als etwa 3 Pa ist. In diesem Fall eignet sich die Abgasnachbehandlungseinrichtung besonders gut für Einzelraumfeuerungsanlagen, deren Abgasstrom allein durch die Temperaturdifferenz zwischen Glutbett und Kamin angetrieben wird. Gleichwohl kann durch den geringen Druckverlust eine sichere Durchströmung der Abgasnachbehandlungseinrichtung ermöglicht werden, ohne dass es zum Rückstau der Abgase in den Aufstellraum der Einzelraumfeuerungsanlage kommt.

In einigen Ausführungsformen der Erfindung kann ein Querschnitt des Strömungspfades zwischen 30 % und 50 % eines Gesamtquerschnittes der Abgasnachbehandlungseinrichtung betragen. In anderen Ausführungsformen der Erfindung kann ein Querschnitt des Strömungspfades zwischen etwa 35 % und etwa 40 % eines Gesamtquerschnittes der Abgasnachbehandlungseinrichtung betragen. Ein solchermaßen ausgebildeter Querschnitt des Strömungspfades kombiniert niedrigen Druckverlust einerseits mit hoher Turbulenz andererseits, sodass eine sichere Durchströmung und eine hinreichend starke Turbulenz sichergestellt sind.

In einigen Ausführungsformen der Erfindung kann die Abgasnachbehandlungseinrichtung als Gussteil hergestellt sein. In einigen Ausführungsformen der Erfindung kann die Abgasnachbehandlungseinrichtung durch Gießen in einer verlorenen Form hergestellt werden.

In anderen Ausführungsformen der Erfindung kann die Abgasnachbehandlungseinrichtung aus mehreren Elementen zusammengesetzt sein. Beispielsweise kann die Abgasnachbehandlungseinrichtung in einigen Ausführungsformen aus einer Mehrzahl von scheibenförmigen Elementen zusammengesetzt sein, welche jeweils einen Längsabschnitt der Abgasnachbehandlungseinrichtung bilden und welche jeweils zumindest eine Ausnehmung aufweisen. In anderen Ausführungsformen der Erfindung kann die Abgasnachbehandlungseinrichtung aus einer Mehrzahl von Elementen zusammengesetzt sein, welche jeweils ein Segment der Abgasnachbehandlungseinrichtung bilden. Eine Abgasnachbehandlungseinrichtung, welche aus einzelnen Elementen zusammengesetzt ist, kann in einigen Ausführungsformen der Erfindung einen geringeren Herstellungsaufwand erfordern und/oder leichter transportierbar sein und/oder aus identischen Teilen modular in unterschiedlichen Größen hergestellt werden, um diese flexibel an den jeweiligen Anwendungszweck anzupassen.

In einigen Ausführungsformen der Erfindung kann die Abgasnachbehandlungseinrichtung zumindest einen anorganischen, nicht metallischen Werkstoff enthalten oder daraus bestehen. Ein solcher Werkstoff kann einerseits eine hohe Wärmekapazität aufweisen und andererseits eine hohe Beständigkeit gegen thermische oder korrosive Angriffe aufweisen. In einigen Ausführungsformen der Erfindung kann ein anorganischer, nicht metallischer Werkstoff zumindest eine Keramik enthalten oder daraus bestehen. In einigen Ausführungsformen der Erfindung kann die Abgasnachbehandlungseinrichtung aus einem Material gefertigt sein, welches zumindest eine Oxidkeramik oder ein Carbid oder ein Nitrid oder ein Oxinitrid enthält oder daraus besteht. In einigen Ausführungsformen der Erfindung kann die Abgasnachbehandlungseinrichtung zumindest Siliziumdioxid und/oder Aluminiumoxid und/oder Magnesiumoxid und/oder Kalziumoxid und/oder Zirkoniumoxid und/oder Chromoxid und/oder Siliziumcarbid enthalten oder daraus bestehen. Diese Materialien sind hochtemperaturfest, können in einigen Ausführungsformen der Erfindung katalytische Eigenschaften aufweisen und sind beständig gegen aggressive Medien, welche in den Abgasen vorhanden sein können oder durch die Umsetzung der Abgase in der Abgasnachbehandlungseinrichtung entstehen können.

In einigen Ausführungsformen der Erfindung kann die Innenseite des Strömungspfades eine gemittelte Rautiefe $R_z$ von 10 $\mu$m bis 3 $\mu$m aufweisen. In anderen Ausführungsformen der Erfindung kann die Innenseite des Strömungspfades eine gemittelte Rautiefe $R_z$ von etwa 8 $\mu$m bis etwa 4 $\mu$m aufweisen. In wiederum anderen Ausführungsformen der Erfindung kann die Innenseite des Strömungspfades eine gemittelte Rautiefe $R_z$ von etwa 6 $\mu$m bis etwa 4,5 $\mu$m aufweisen. Für die Zwecke der vorliegenden Beschreibung bezeichnet die gemittelte Rautiefe $R_z$ den Mittelwert aus Einzelrautiefen von fünf aufeinanderfolgenden Einzelmessstrecken im Rauheitsprofil. Die Extremwerte in jedem Messabschnitt werden addiert und die Spannweite durch die Anzahl der Messabschnitte dividiert. Die Rauheit der Innenseite des Strömungspfades kann dazu führen, dass Feinstäube und Rußpartikel in der Abgasnachbehandlungseinrichtung abgeschieden und nachfolgend oxidiert werden, sodass diese die Abgasnachbehandlungseinrichtung nicht in Form unerwünschter Partikel verlassen können.

Nachfolgend soll die Erfindung anhand eines Ausführungsbeispieles ohne Beschränkung des allgemeinen Erfindungsgedankens näher erläutert werden. Dabei zeigt

Figur 1 eine Abgasnachbehandlungseinrichtung gemäß der vorliegenden Erfindung in der Ansicht.
Figur 2 zeigt die Abgasnachbehandlungseinrichtung gemäß Figur 1 entlang der Schnittlinie A-A.
Figur 3 zeigt die Abgasnachbehandlungseinrichtung gemäß Figur 1 entlang der Schnittlinie B-B.
Figur 4 zeigt den gewendelten Strömungspfad gemäß der vorliegenden Erfindung in einer teilweise geschnittenen, dreidimensionalen Darstellung.

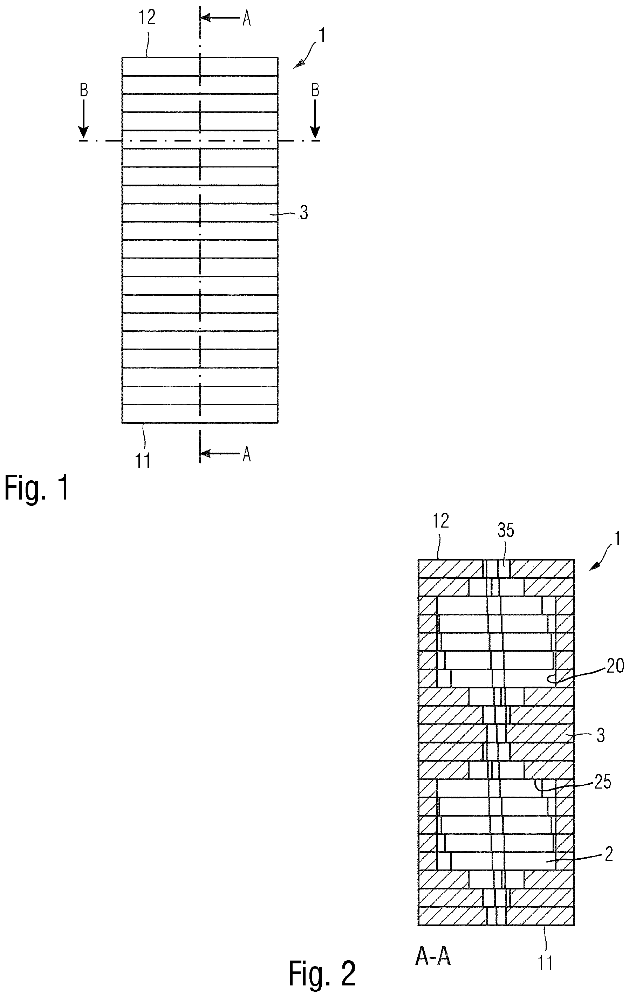

Anhand der Figuren 1 bis 4 wird eine beispielhafte Ausführungsform einer erfindungsgemäßen Abgasnachbehandlungseinrichtung näher erläutert. Die Abgasnachbehandlungseinrichtung 1 weist zumindest einen Strömungspfad 2 auf, welcher von einem ersten Ende 11 der Abgasnachbehandlungseinrichtung 1 zu einem zweiten Ende 12 der Abgasnachbehandlungseinrichtung 1 in Form einer Schraubenlinie verläuft. Bei Betrieb der Abgasnachbehandlungseinrichtung wird dem Strömungspfad über das erste Ende 11 ein Abgas zugeführt, beispielsweise aus einem Heizkessel, einem Industrieofen oder einer Einzelraumfeuerungsanlage. Das Abgas durchströmt den Strömungspfad 2 und tritt am zweiten Ende 12 der Abgasnachbehandlungseinrichtung 1 aus.

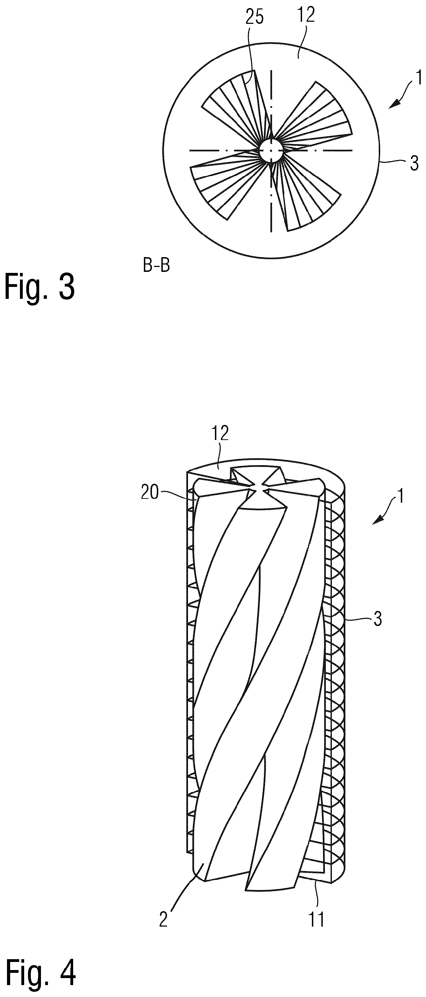

Wie aus Figur 2 und Figur 4 ersichtlich ist, verläuft der Strömungspfad entlang einer Schraubenlinie, d. h. einer Kurve, die sich mit einer Steigung um den Mantel eines Zylinders windet. Im dargestellten Ausführungsbeispiel ist die Steigung konstant. In anderen Ausführungsformen der Erfindung kann die Steigung entlang der Länge der Schraubenlinie variieren.

Die Schraubenlinie ist durch die Ganghöhe $h$ charakterisiert, also diejenige Strecke, um welche sich der Strömungspfad bei einer vollen Umdrehung nach oben windet, d. h. in Richtung des zweiten Endes 12. Weiterhin ist die Form des Strömungspfades durch die Steigung $k$ charakterisiert, welches sich aus dem Radius des Strömungspfades und der Ganghöhe zu $k = \dfrac{h}{2\pi r}$ ergibt. Erfindungsgemäß weist die Schraubenlinie eine Steigung k auf, welche größer als etwa 0,8 und kleiner als etwa 1,2 ist.

Wie in den Querschnitten gemäß Figur 2 und Figur 3 ersichtlich ist, weist die Innenseite 20 des Strömungspfades 2 eine Mehrzahl von Stufen 25 auf, welche jeweils eine Höhe von etwa 8 mm bis etwa 30 mm oder von etwa 15 mm bis etwa 25 mm aufweisen. Das im Strömungspfad 2 strömende Abgas erfährt somit eine turbulente Strömung, welche dafür sorgt, dass sich das Abgas effizient mit einem Oxidations- und/oder Reduktionsmittel durchmischt, sodass Kohlenwasserstoffe, Kohlenmonoxid, Feinstäube, Ruß oder andere Schadstoffe effizient oxidiert werden.

Querschnitt, Länge und Steigung $k$ des Strömungspfades sind so gewählt, dass der Druckverlust eines den Strömungspfad 2 durchströmenden Abgases kleiner als etwa 10 Pa ist.

Im dargestellten Ausführungsbeispiel ist die Abgasnachbehandlungseinrichtung aus einer Mehrzahl von Scheiben 3 zusammengesetzt, welche jeweils eine kleeblattförmige Öffnung 35 aufweisen. Durch Übereinanderstapeln der Scheiben, welche um jeweils einen vorgebbaren Drehwinkel zur benachbarten Scheibe versetzt sind, entsteht der Strömungspfad 2 in der gewünschten Form. In einigen Ausführungsbeispielen der Erfindung können die scheibenförmigen Elemente 3 eine Dicke von etwa 15 mm bis etwa 25 mm aufweisen und um einen Winkel zwischen etwa 10° und etwa 30° gegenüber den benachbarten scheibenförmigen Elementen 3 gedreht sein. Hierbei kann der Drehwinkel umso größer sein, je kürzer die Abgasnachbehandlungseinrichtung 1 insgesamt ist, sodass die Steigung der Schraubenlinie des Strömungspfades im genannten Bereich liegt.

Nachfolgend soll die Wirksamkeit der erfindungsgemäßen Abgasnachbehandlungseinrichtung anhand eines Vergleichsbeispiels näher erläutert werden. Im Vergleichsbeispiel wird ein Heizkessel mit 85 kW thermischer Leistung verwendet, welcher mit Hackschnitzeln und Stroh befeuert wird. Die Abgase des Heizkessels werden einmal über ein konventionelles Abgasrohr abgeleitet und zum anderen der vorstehend beschriebenen Abgasnachbehandlungseinrichtung zugeführt. In beiden Fällen erfolgt eine Abgasmessung nach DIN 18895. Dabei ergeben sich folgende Verbesserungen der Abgaswerte, wenn die erfindungsgemäße Abgasnachbehandlungseinrichtung eingesetzt wird:

|  | Stand der Technik | erfindungsgemäße Abgasnachbehandlungseinrichtung |
|---|---|---|
| CO | ≈ 120 ppm | < 3 ppm |
| $CO_2$ | < 12 % | > 16 Vol% |
| $O_2$ | ≈ 8 - 11 Vol% | < 3,8 Vol% |
| $NO_x$ | 420 ppm | 220 ppm |
| $CH_x$ | ≈ 100 ppm | < 5 ppm |

Die vorstehenden Werte zeigen, dass durch die erfindungsgemäße Abgasnachbehandlungseinrichtung die Verbrennung wesentlich verbessert werden kann. Der Restsauerstoff im Abgas sinkt und der $CO_2$-Gehalt steigt an, was auf eine vollständige Verbrennung des Brennstoffes hinweist. Ebenso nimmt der Schadstoffgehalt des Abgases ab und erreicht oder unterschreitet typische Werte einer Erdgasheizung.

Selbstverständlich ist die Erfindung nicht auf die dargestellten Ausführungsformen beschränkt. Die vorstehende Beschreibung ist daher nicht als beschränkend, sondern als erläuternd anzusehen.

**Patentansprüche**

1. Abgasnachbehandlungseinrichtung (1) für eine Feuerstätte, aufweisend zumindest einen Strömungspfad (2), welcher von einem ersten Ende (11) der Abgasnachbehandlungseinrichtung (1) zu einem zweiten Ende (12) der Abgasnachbehandlungseinrichtung (1) in Form einer Schraubenlinie verläuft,
**dadurch gekennzeichnet, dass**
die Schraubenlinie eine Steigung $k$ besitzt, welche größer als 0,35 oder größer als etwa 0,6 oder größer als etwa 0,8 oder größer als etwa 1,0 oder größer als etwa 1,2 und kleiner als als 2,5 ist und Querschnitt, Länge und Steigung $k$ des Strömungspfades (2) so gewählt sind, dass der Druckverlust eines den Strömungspfad (2) durchströmenden Abgases kleiner als 10 Pa ist.

2. Abgasnachbehandlungseinrichtung nach Anspruch 1, **dadurch gekennzeichnet, dass** die Schraubenlinie eine Steigung $k$ besitzt, welche kleiner als etwa 1,0 oder kleiner als etwa 1,2 oder kleiner als etwa 1,6 oder kleiner als etwa 2,0 ist.

3. Abgasnachbehandlungseinrichtung nach Anspruch 1 oder 2, **dadurch gekennzeichnet, dass** der Strömungspfad (2) einen Durchmesser von 20 cm bis 150 cm oder von etwa 25 cm bis etwa 80 cm oder von etwa 80 cm bis etwa 120 cm oder von etwa 20 cm bis etwa 50 cm aufweist.

4. Abgasnachbehandlungseinrichtung nach einem der Ansprüche 1 bis 3, **dadurch gekennzeichnet, dass** die Innenseite (20) des Strömungspfades (2) Stufen (25) aufweist.

5. Abgasnachbehandlungseinrichtung nach Anspruch 4, **dadurch gekennzeichnet, dass** die Stufen (25) jeweils eine Höhe von 8 mm bis 30 mm oder von 15 mm bis 25 mm aufweisen.

6. Abgasnachbehandlungseinrichtung nach einem der Ansprüche 1 bis 5, **dadurch gekennzeichnet, dass** die Länge des Strömungspfades (2) das 0,5-fache bis 5-fache oder das 0,9-fache bis 3-fache oder das 1-fache bis 2,5-fache oder das 0,9-fache bis 2-fache der Ganghöhe *h* beträgt.

7. Abgasnachbehandlungseinrichtung nach einem der Ansprüche 1 bis 6, **dadurch gekennzeichnet, dass** der Druckverlust eines den Strömungspfad (2) durchströmenden Abgases kleiner als etwa 3 Pa ist.

8. Abgasnachbehandlungseinrichtung nach einem der Ansprüche 1 bis 7, **dadurch gekennzeichnet, dass** ein Querschnitt des Strömungspfades (2) zwischen 30% und 50% oder zwischen etwa 35% und etwa 45% eines Gesamtquerschnitts der Abgasnachbehandlungseinrichtung (1) beträgt.

9. Abgasnachbehandlungseinrichtung nach einem der Ansprüche 1 bis 8, **dadurch gekennzeichnet, dass** diese aus einer Mehrzahl von scheibenförmigen Elementen (3) zusammengesetzt ist, welche jeweils einen Längsabschnitt der Abgasnachbehandlungseinrichtung (1) bilden und welche jeweils zumindest eine Ausnehmung (35) aufweisen.

10. Abgasnachbehandlungseinrichtung nach einem der Ansprüche 1 bis 9, **dadurch gekennzeichnet, dass** diese zumindest einen anorganischen, nicht-metallischen Werkstoff enthält oder daraus besteht oder

> dass diese zumindest eine Keramik enthält oder daraus besteht oder
> dass diese zumindest eine Oxidkeramik oder ein Karbid oder ein Nitrid oder ein Oxinitrid enthält oder daraus besteht oder
> dass diese zumindest Siliziumdioxid und/oder Aluminiumoxid und/oder Magnesiumoxid und/oder Kalziumoxid und/oder Zirconiumoxid und/oder Chromoxid und/oder Siliziumkarbid enthält oder daraus besteht.

11. Abgasnachbehandlungseinrichtung nach einem der Ansprüche 1 bis 10, **dadurch gekennzeichnet, dass** die Innenseite (20) des Strömungspfades (2) eine gemittelte Rautiefe *Rz* von 10 μm bis 3 μm oder von etwa 8 μm bis etwa 4 μm oder von etwa 6 μm bis etwa 4,5 μm aufweist.

12. Feuerstätte mit einer Abgasnachbehandlungseinrichtung nach einem der Ansprüche 1 bis 11.

**Claims**

1. Exhaust gas aftertreatment device (1) for a fireplace, comprising at least one flow path (2) which extends from a first end (11) of the exhaust gas aftertreatment device (1) to a second end (12) of the exhaust gas aftertreatment device (1) in the form of a helical line,
   **characterized in that**
   the helical line has a pitch k which is greater than 0.35 or greater than approximately 0.6 or greater than approximately 0.8 or greater than approximately 1.0 or greater than approximately 1.2 and less than 2.5, and the cross-section, length and pitch k of the flow path (2) are selected in such a way that the pressure loss of an exhaust gas flowing through the flow path (2) is less than 10 Pa.

2. Exhaust gas aftertreatment device according to claim 1, **characterized in that** the helical line has a pitch *k* which is less than approximately 1.0 or less than approximately 1.2 or less than approximately 1.6 or less than approximately 2.0.

3. Exhaust gas aftertreatment device according to claim 1 or 2, **characterized in that** the flow path (2) has a diameter of 20 cm to 150 cm or of approximately 25 cm to approximately 80 cm or of approximately 80 cm to approximately 120 cm or of approximately 20 cm to approximately 50 cm.

4. Exhaust gas aftertreatment device according to any one of claims 1 to 3, **characterized in that** the inner side (20) of the flow path (2) has steps (25).

5. Exhaust gas aftertreatment device according to claim 4, **characterized in that** the steps (25) each have a height of 8 mm to 30 mm or of 15 mm to 25 mm.

6. Exhaust gas aftertreatment device according to any one of claims 1 to 5, **characterized in that** the length of the flow path (2) is 0.5 to 5 times or 0.9 to 3 times or 1 to 2.5 times or 0.9 to 2 times the pitch h.

7. Exhaust gas aftertreatment device according to any one of claims 1 to 6, **characterized in that** the pressure loss of an exhaust gas flowing through the flow path (2) is less than approximately 3 Pa.

8. Exhaust gas aftertreatment device according to any one of claims 1 to 7, **characterized in that** a cross-section of the flow path (2) is between 30% and 50% or between approximately 35% and approximately 45% of a total cross-section of the exhaust gas aftertreatment device (1).

9. Exhaust gas aftertreatment device according to any one of claims 1 to 8, **characterized in that** it is composed of a plurality of disk-shaped elements (3), each of which forms a longitudinal portion of the exhaust gas aftertreatment device (1) and each of which has at least one recess (35).

10. Exhaust gas aftertreatment device according to any one of claims 1 to 9, **characterized in that** it contains or consists of at least one inorganic, non-metallic material, or

   **in that** it contains or consists of at least one ceramic, or
   **in that** it contains or consists of at least one oxide ceramic or a carbide or a nitride or an oxynitride, or
   **in that** it contains or consists of at least silicon dioxide and/or aluminum oxide and/or magnesium oxide and/or calcium oxide and/or zirconium oxide and/or chromium oxide and/or silicon carbide.

11. Exhaust gas aftertreatment device according to any one of claims 1 to 10, **characterized in that** the inner side (20) of the flow path (2) has an average roughness depth $Rz$ of 10 $\mu$m to 3 $\mu$m or of approximately 8 $\mu$m to approximately 4 $\mu$m or of approximately 6 $\mu$m to approximately 4.5 $\mu$m.

12. Fireplace comprising an exhaust gas aftertreatment device according to any one of claims 1 to 11.


**Revendications**

1. Dispositif de post-traitement de gaz d'échappement (1) pour un foyer, présentant au moins un trajet d'écoulement (2) qui s'étend d'une première extrémité (11) du dispositif de post-traitement de gaz d'échappement (1) à une deuxième extrémité (12) du dispositif de post-traitement de gaz d'échappement (1) sous la forme d'une ligne hélicoïdale, **caractérisé en ce que** la ligne hélicoïdale présente un pas k supérieur à 0,35 ou supérieur à environ 0,6 ou supérieur à environ 0,8 ou supérieur à environ 1,0 ou supérieur à environ 1,2 et inférieur à 2,5, et la section transversale, la longueur et le pas *k* du trajet d'écoulement (2) sont choisis de telle sorte que la perte de charge des gaz d'échappement s'écoulant à travers le trajet d'écoulement (2) est inférieure à 10 Pa.

2. Dispositif de post-traitement de gaz d'échappement selon la revendication 1, **caractérisé en ce que** la ligne hélicoïdale a un pas *k* qui est inférieur à environ 1,0 ou inférieur à environ 1,2 ou inférieur à environ 1,6 ou inférieur à environ 2,0.

3. Dispositif de post-traitement de gaz d'échappement selon la revendication 1 ou 2, **caractérisé en ce que** le trajet d'écoulement (2) présente un diamètre de 20 cm à 150 cm ou d'environ 25 cm à environ 80 cm ou d'environ 80 cm à environ 120 cm ou d'environ 20 cm à environ 50 cm.

4. Dispositif de post-traitement de gaz d'échappement selon l'une des revendications 1 à 3, **caractérisé en ce que** la face intérieure (20) du trajet d'écoulement (2) présente des gradins (25).

5. Dispositif de post-traitement de gaz d'échappement selon la revendication 4, **caractérisé en ce que** les gradins (25) ont chacun une hauteur de 8 mm à 30 mm ou de 15 mm à 25 mm.

6. Dispositif de post-traitement de gaz d'échappement selon l'une des revendications 1 à 5, **caractérisé en ce que** la longueur du trajet d'écoulement (2) est de 0,5 à 5 fois, ou de 0,9 à 3 fois, ou 1 à 2,5 fois, ou de 0,9 à 2 fois la hauteur de pas h.

7. Dispositif de post-traitement de gaz d'échappement selon l'une des revendications 1 à 6, **caractérisé en ce que** la perte de charge des gaz d'échappement s'écoulant à travers le trajet d'écoulement (2) est inférieure à environ 3 Pa.

8. Dispositif de post-traitement de gaz d'échappement selon l'une des revendications 1 à 7,
**caractérisé en ce qu'**une section transversale du trajet d'écoulement (2) est comprise entre 30 % et 50 % ou entre environ 35 % et environ 45 % d'une section transversale totale du dispositif de post-traitement de gaz d'échappement (1).

9. Dispositif de post-traitement de gaz d'échappement selon l'une des revendications 1 à 8,
**caractérisé en ce qu'**il est composé d'une pluralité d'éléments en forme de disques (3) qui forment chacun un tronçon longitudinal du dispositif de post-traitement de gaz d'échappement (1) et qui présentent chacun au moins un évidement (35).

10. Dispositif de post-traitement de gaz d'échappement selon l'une des revendications 1 à 9,

**caractérisé en ce qu'**il contient au moins un matériau inorganique non métallique ou est constitué de celui-ci, ou
**en ce qu'**il contient au moins une céramique ou est constitué de celle-ci, ou
**en ce qu'**il contient au moins une céramique oxydée ou un carbure ou un nitrure ou un oxynitrure ou est constitué de ceux-ci, ou
**en ce qu'**il contient au moins un dioxyde de silicium et/ou un oxyde d'aluminium et/ou un oxyde de magnésium et/ou un oxyde de calcium et/ou un oxyde de zirconium et/ou un oxyde de chrome et/ou un carbure de silicium, ou est constitué de ceux-ci.

11. Dispositif de post-traitement de gaz d'échappement selon l'une des revendications 1 à 10,
**caractérisé en ce que** la face intérieure (20) du trajet d'écoulement (2) présente une profondeur de rugosité moyenne *Rz* de 10 $\mu$m à 3 $\mu$m ou d'environ 8 $\mu$m à environ 4 $\mu$m ou d'environ 6 $\mu$m à environ 4,5 $\mu$m.

12. Foyer comprenant un dispositif de post-traitement de gaz d'échappement selon l'une des revendications 1 à 11.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5633066 A1

- DE 102019218807 A1